(19)

**Europäisches Patentamt**

**European Patent Office**

**Office européen des brevets**

(11) **EP 4 738 734 A1**

(12) **EUROPEAN PATENT APPLICATION**

(43) Date of publication:
06.05.2026 Bulletin 2026/19

(21) Application number: 24383197.1

(22) Date of filing: 31.10.2024

(51) International Patent Classification (IPC):
*H04K 3/00* *(2006.01)*

(52) Cooperative Patent Classification (CPC):
**H04K 3/22;** H04B 3/54

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Iberdrola, S.A.
48009 Bilbao (ES)**

(72) Inventors:
• **Omri, Aymen
  Bizerte (TN)**
• **Hernández Fernández, Javier
  Pozuelo de Alarcón, Madrid (ES)**

(74) Representative: **Pons IP
Glorieta Rubén Darío 4
28010 Madrid (ES)**

(54) **METHOD AND APPARATUS FOR JAMMING DETECTION IN POWER LINE COMMUNICATIONS**

(57)     A method and a system for detecting jamming in a power line communication network, the system comprising a legitimate transmitter A, which sends messages to a legitimate receiver B and a jamming device which injects artificial malicious signals/noise into the transmission between A and B, generating DoS attacks; the method comprising the steps of estimating the transmitted samples to compare the noise free communication versus the jammed one; calculating the BER of a series of samples and plotting BER vs added noise power values curves; and analysing these curves to detect the presence of jamming and related channel characteristics.

EP 4 738 734 A1

**Description**

**OBJECT OF THE INVENTION**

The present invention relates to power line communication, particularly, to a method and apparatus for jamming detection in communications systems.

Thus, it is an object of the invention a method and apparatus for jamming detection in power line communications that allows the detection of the jamming signals by analyzing a bit error rate (BER) variation.

**BACKGROUND ART**

In the initial stages, power lines were designed to transfer electricity in the 50-60 Hz frequency range from a limited number of generators, or sources, to many sinks, or consumers. It is a known fact that some of the strongest buildings ever constructed are electricity transmission towers and lines. Although PLC technology has historically had very few uses, there is now a chance that it may be widely acknowledged as an alternative mean of data transfer. The need to deliver digital phone, video, and Internet data within the home is growing as broadband connectivity inevitably becomes available. Although installing specialty wiring across communities and homes is one possibility, it is costly and time-consuming. Along with many other advantages, PLC technology makes it possible to employ the widely used power distribution infrastructure currently in place to give high-speed networking capabilities.

Due to this PLC is a cost-efficient communication solution that supports a wide range of applications, such as data transmissions, home automation, smart metering, grid monitoring, and vehicular communications. However, one of the main challenges this technology faces is that PLC are susceptible to malicious attacks from illegitimate parties physically that are connected to the same power line network, such as Denial of Service (DoS) attacks. This may have strong negative impacts such as the interruption of the communications or altering the functioning of the connected devices.

Considering this phenomenon, one of the challenges that PLC research faces is to develop strategies to study this kind of attacks to try to anticipate them if possible and solve them as soon as possible to reduce their impact.

Currently, in the literature a few studies have been published regarding the study of the effects of jamming attacks on PLC systems, evaluating the Probability Density Function (PDF) of the instantaneous Signal-to-Jamming-plus-Noise Ratio (SJNR) and the instantaneous Signal-to-Noise Ratio (SNR). In other works, attacks simulations are performed by injection of Additive White Gaussian Noise (AWGN) to develop detection techniques based in Cumulative Sum (CUSUM) or even artificial intelligence approaches such as implementation of neural networks.

In the patent ES2605105T3, a method for reducing jamming in communication line or network based in the procedure automatically detects the interferences analyzing parameters such as the SNR or the BER.

However, these procedures analyzing the instantaneous value of the BER lack accuracy, because an increase in this parameter can be caused by other reasons other than jamming attacks, such as channel attenuation or the presence of additive noise.

Considering this, proposing an efficient solution to detect jamming attacks in an accurate way is of high importance.

**DESCRIPTION OF THE INVENTION**

The invention consists of a system and method for jamming detection for communications systems, preferably power line communication systems.

The system consists of a power line communication scenario in which there is a legitimate transmitter (A) which is sending messages to a legitimate receptor (B), using $N_{sc}$ subcarriers in the presence of a potential malicious interference device (J) connected to that same communication network.

This jammer J has the capability of producing DoS attacks by using a malicious interference method which implies the injection of an artificial signal or noise in the transmission link between A and B.

The power line communication method, which could use 4-QAM Modulation, starts with establishing a power line communication between a transmitter (A) and a receiver (B) using $N_{sc}$ subcarriers.

Thus, the received signal at B can be expressed as follows:

$$y_{k,n}^{A-B} = P_A h_{k,n}^{A-B} x_{k,n}^{A-B} + P_J h_{k,n}^{J-B} z_{k,n}^{J-B} + n_{k,n}^{B}$$

wherein $N_{sc}$ is the number of subcarriers with index $k$, $N_{symb}$ is a number of symbols transmitted represented as $n$, $x_{k,n}^{A-B}$ is a transmitted sample, $z_{k,n}^{J-B}$ is a jamming signal, $P_A$ is a transmit signal power of A, $P_J$ is a jamming signal power,

$h_{k,n}^{X-B}$ is a channel gain of the link, $X$ -$B$, $X \in \{A, J\}$, and $n_{k,n}^{B}$ is the additive noise received at B.

Then, in the method of the invention for each subcarrier k, a complex channel gain ( $\hat{h}_{k,0}^{A-B}$ ) is estimated in a first transmitted symbol ($n = 0$).

In such a case, the estimated complex channel gain ( $\hat{h}_{k,0}^{A-B}$ ) between $A$ and $B$ would be defined by:

$$\hat{h}_{k,0}^{A-B} = h_{k,0}^{A-B} + e_{k,0}^{A-B}$$

wherein $e_{k,0}^{A-B}$ is defined as:

$$e_{k,0}^{A-B} = \frac{n_{k,0}^{B}}{x_{k,0}^{A-B}}$$

being $n_{k,0}^{B}$ the environment additive noise received at 8 during the channel estimation performed on a first symbol ($n = 0$).

Also, in the method of the invention, the PLC channels could be assumed to be Rayleigh fading channels with mean $\overline{H}_{k,n}^{X-B}$ defined by:

$$\overline{H}_{k,n}^{X-B}(f_k, d_{X-B}) = exp\left(-2\left[a_0 + a_1 f_k^{a_2}\right] d_{X-B}\right)$$

wherein, $f_k$ is the frequency of the subcarrier $k$, $d_{X-B}$ is the distance between $X$, $X \in \{A,J\}$ and B, $a_0$, $a_1$ and $a_2$ are attenuation parameters of the PLC signal related to the PLC environment under consideration.

The symbols, preferably, are transmitted using an Orthogonal Frequency-Multiplexing (OFDM) scheme.

Then, the transmitted sample ( $x_{k,n}^{A-B}$ ) is sent, adding an added noise signal with power ($W_l^B$), comprising a set of values ($w$) of amplitude represented by $l$. Next step is obtaining a received sample (( $y_{k,n}^{A-B}$ ). Then, by using channel equalization, a detected sample ( $\hat{x}_{k,n}^{A-B}$ ) is determined from the received sample ( $y_{k,n}^{A-B}$ ) and the estimated complex channel gain ( $\hat{h}_{k,0}^{A-B}$ ).

The estimation of the channel gain could be performed by using multiple known estimation techniques. Preferably, a Least squares (LS) method is used, which is a commonly used pilot-based channel estimation algorithm in OFDM systems.

By using the received sample and the estimated channel gain it is possible to detect the transmitted sample by using channel equalization. As in the channel estimation, there are many known equalization techniques that can be used.

Preferably, in this case, Least squares is used resulting that:

$$detected\ sample = \frac{received\ sample}{estimated\ channel}$$

A reference BER curve without jamming is calculated using the transmitted sample ( $x_{k,n}^{A-B}$ ) and the detected sample ( $\hat{x}_{k,n}^{A-B}$ ) for multiple values of amplitude of the added noise signal ( $W_l^B$ ). In some preferred embodiments, this reference *BER* curve is linear when the added noise signal power ( $W_l^B$ ) is between *40 dBμV* and *120 dBμV.*

This reference curve is used for testing a transmitted signal for jamming detection by sending a testing transmitted sample ( $x_{k,n}^{A-B}$ ) adding the added noise signal ( $W_l^B$ ) power and then obtaining a testing detected sample ( $\hat{x}_{k,n}^{A-B}$ ).

Then, a testing BER curve is evaluated between the testing transmitted sample ( $x_{k,n}^{A-B}$ ) and the testing detected sample ( $\hat{x}_{k,n}^{A-B}$ ) for each value of amplitude of the added noise signal ( $W_l^B$ ). This curve is compared with the reference BER curve and if both match, there is no jamming. Otherwise, if both are different, there is jamming.

The testing BER curve would be constant when the added noise signal power ( $W_l^B$ ) is between *40 dBμV* and *120 dBμV* and when the added noise signal power ( $W_l^B$ ) is less than an attenuated jamming signal power $P_J \overline{H}_{k,n}^{J-A}$ .

This attenuated jamming signal power $P_J \overline{H}_{k,n}^{J-A}$ could be obtained as the intersection between an asymptotic line coincident with the constant value of the testing BER curve and the reference BER curve.

The testing BER curve, if there is a variable jamming, is variable and no linear when the added noise signal power ( $W_l^B$ ) is between 40 dBμV and 120 dBμV.

Further analysis of that curve could allow to perform an estimation of a jammer distance because the constant value of the testing BER curve decreases when the distance between the jamming attack and the receiver (B) increases.

Also, in the method of the invention, a signal-to-jamming-plus-noise ratio (SJNR) could be calculated by:

$$\gamma_{k,n} = \frac{P_A H_{k,n}^{A-B}}{P_J H_{k,n}^{J-B} z_{k,n}^{J-B} + N_{k,n}^B}$$

where $H_{k,n}^{X-B}$ is the squared magnitude value of the channel gain $h_{k,n}^{x-B}$, $X \in \{A,J\}$, and $N_{k,n}^B$ is the power of the environment additive noise $n_{k,0}^B$ .

The invention also relates to a power line communication system for detecting jamming comprising:

- a transmitter (*A*);
- a receiver (*B*);
- a communication network between the transmitter (*A*) and the receiver (*B*); and
- a processing unit configured to carry out the steps of the method defined to detect a jamming device (*J*) connected to the same communication network and configured to produce DoS attacks by the injection of an artificial signal or noise in the communication network.

## DESCRIPTION OF THE DRAWINGS

To complement the description that is being made and for the purpose of helping to better understand the features of the invention according to a preferred practical exemplary embodiment thereof, a set of drawings is attached as an integral part of said description in which the following is depicted in an illustrative and non-limiting manner:

Figure 1 shows a diagram of a PLC wiretap channel model according to the present invention.

Figure 2 shows BER vs. added noise power curves, with jamming attack and non-jamming attack scenarios. The jamming attack scenario with a jamming signal power of *117 dBμV (a = 0.01),* and *d_{J-B} = 20* m.

Figure 3 shows BER vs. added noise power curve, with different *d_{J-B}* distances, and a fixed jamming signal power of 117 dBμV.

Figure 4 shows BER vs. added noise power curve, with different jamming signal powers, and a fixed distance *d_{J-B}* = 20 m.

Figure 5 shows BER vs. added noise power curve, with variable jamming signal power.

## PREFERRED EMBODIMENTS OF THE INVENTION

The invention consists of a system and method for jamming or interference detection for power line communication systems.

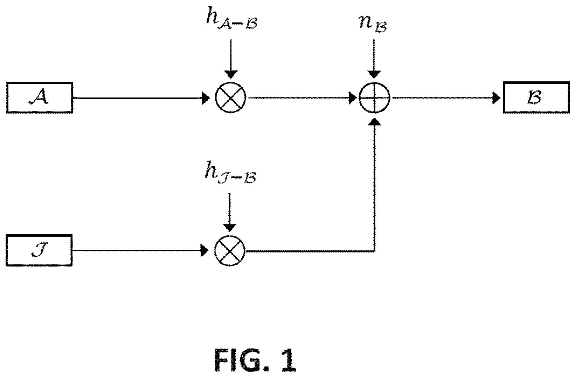

The system consists of a power line communication scenario in which there is a legitimate transmitter (*A*) which is sending messages to a legitimate receptor (*B*), in the presence of a potential malicious interference device (*J*) connected to that same communication network. The diagram of this system is shown in Figure 1.

This jammer *J* has the capability of producing DoS attacks by using a malicious interference method which implies the injection of an artificial signal or noise in the transmission link between *A* and *B.*

The method of the invention allows to detect the jamming attack caused by *J* using an algorithm that analyzes the bit error rate (BER) versus the added noise power values curves.

For this purpose, the method starts with the signal reception in B during the OFDM where the signal can be defined in terms of the symbol (*n*) and the subcarrier (*k*) in the following way:

$$y_{k,n}^{A-B} = P_A h_{k,n}^{A-B} x_{k,n}^{A-B} + P_J h_{k,n}^{J-B} z_{k,n}^{J-B} + n_{k,n}^{B}$$

where $P_A$ is the transmit signal power of A, $P_J$ is the interference signal power, $h_{k,n}^{X-B}$ is the channel gain of the link, *X-B*, *X* $\in$ {A,J }, and $n_{k,n}^{B}$, is the additive noise received at *B*.

The estimated channel between A and B is defined by:

$$\hat{h}_{k,0}^{A-B} = h_{k,0}^{A-B} + e_{k,0}^{A-B}$$

where the error is defined as follows:

$$e_{k,0}^{A-B} = \frac{n_{k,0}^{B}}{x_{k,0}^{A-B}} ;$$

with variance $\sigma_e^2 = \frac{N_k^B}{P_A}$;, where $n_{k,0}^{B}$ represents the complex noise sample during the channel estimation performed on the first OFDM symbol index n = 0.

Once the channels have been defined, the method has 3 main steps:

1. A signalling between *A* and *B* is performed to estimate the channel $\hat{h}_{k,0}^{A-B}$, during the first OFDM symbol index *n* = 0. By assuming that the PLC channel is slow fading, the estimated channel during the first OFDM symbol will be used in the channel equalization for the other OFDM symbols $n \in \{1, 2, ..., N_{Symb}^{Frm} - 1\}$.

2. For each noise power value , $W_l^B \forall \in l \{1, 2, ..., N_W \}$, *A* transmits to *B*, $N_{Frame}$ from the known samples $x_{k,n}^{A-B}$ where $k \in \{1, 2, ..., N_{SC}^{\square}\}$ and n $\in$ {1, 2, ..., $N_{Symb}^{Frm} - 1$}. When adding the noise power values ( $W_l^B$ ), *B* detects the samples it receives, in this case $y_{k,n}^{A-B}$. From the differences between the transmitted samples $x_{k,n}^{A-B}$, and the detected samples $y_{k,n}^{A-B}$, the bit error rate BER (*l*), is computed, creating a BER vector with length $N_W$.

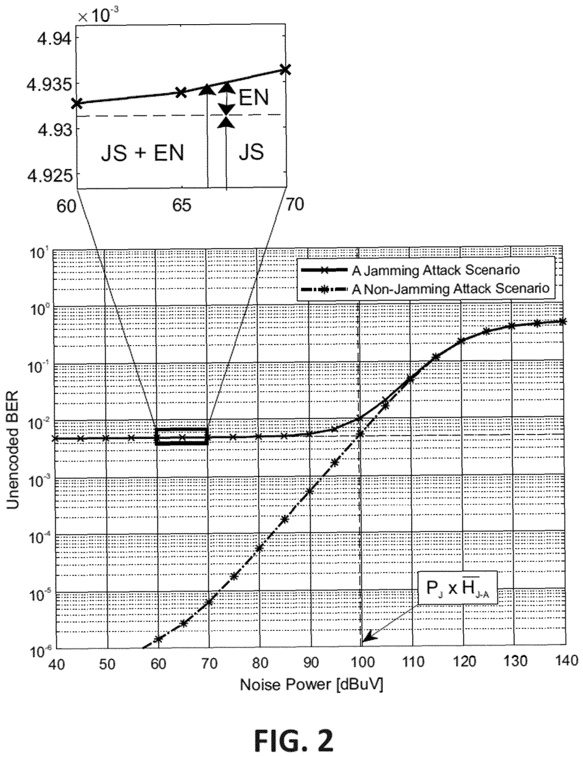

3. It is created a curve that plots the BER versus the added noise power values and it is analyzed it to identify potential jamming attacks. The main idea is to compare the behavior of the BER's variation versus the added noise power $W_l^B$. In these curves, clear patterns for the jamming and non-jamming cases can be observed, such as in the Figure 2.

Also, a general instantaneous SJNR at *B,* for subcarrier *k* and OFDM symbol n, can be calculated as follows:

$$\gamma_{k,n} = \frac{P_A H_{k,n}^{A-B}}{P_J H_{k,n}^{J-B} z_{k,n}^{J-B} + N_{k,n}^{B}}$$

where $H_{k,n}^{X-B}$ is the squared magnitude value of the channel gain $h_{k,n}^{x-B}$, *X* $\in$ {A,J}.

The PLC channels are assumed to be Rayleigh fade channels with mean $\overline{H}_{k,n}^{X-B}$ defined by:

$$\overline{H}_{k,n}^{X-B}(f_k, d_{X-B}) = \exp\left(-2\left[a_0 + a_1 f_k^{a_2}\right] d_{X-B}\right)$$

where, $f_k$ is the frequency of the subcarrier k, $d_{X-B}$ is the distance between X, $X \in \{A, J\}$ and B, $a_0$, $a_1$ and $a_2$ are attenuation parameters of the PLC signal related to the PLC environment under consideration.

Analysing the plots, there is a clear difference between the BER variations of the two scenarios. In case of a non-jamming scenario, and for a noise power less than 110 dBμV, the BER increases linearly with the increased values of the noise power, which is expected. In fact, increasing the noise power from 40 dBμV to 110 dBμV significantly decreases the received SNR, in such a way that an increase in the BER can be observed, with a well-known variation behaviour.

However, in case of a jamming scenario, with added noise of power less or equals to 90 dBμV, the environment noise power (the total power of the PLC noise and the AWGN) is negligible compared to the jamming signal power, e.g., 117 dBμV. In this case, the impact of the jamming attack on the BER is much higher than that of the environment noise. Consequently, the BER is almost constant for the mentioned noise power range, which presents a key behaviour for a jamming attack. In addition, and as illustrated in this figure, the x's coordinate of the intersection point between the asymptotic line of the jamming scenario's BER curve and the non-jamming scenario's BER curve presents the estimation of the attenuated jamming signal power; $P_J \times \overline{H}_{J-A}$. This estimated value is equal to 99.62 dBμV, where the known simulated value is equal to 99.63 dBμV, which confirms the accuracy of this approach that offers an error of 4.21e - 7 in this case. Consequently, by using the BER curves' analysis, it will be easy to detect a jamming attack, as well as the used jamming signal power attenuated by the corresponding channel's gain.

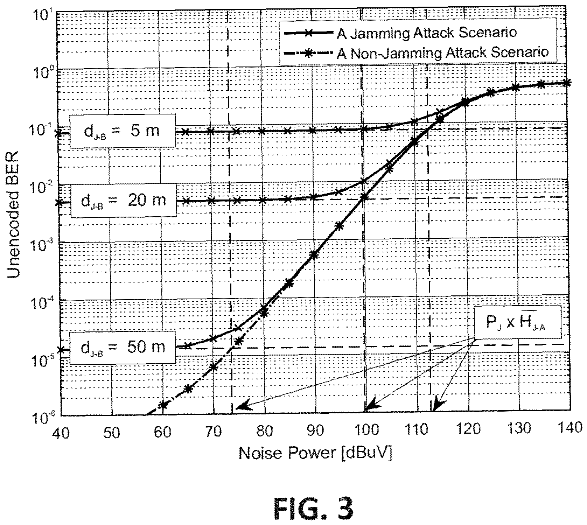

Moreover, these curves can be also used to obtain additional information from the jamming attack, such as the jamming agent distance, considering that the BER value when it is kept stable decreases with the increased distances between the jammer and the legal receiver as it is shown in Figure 3.

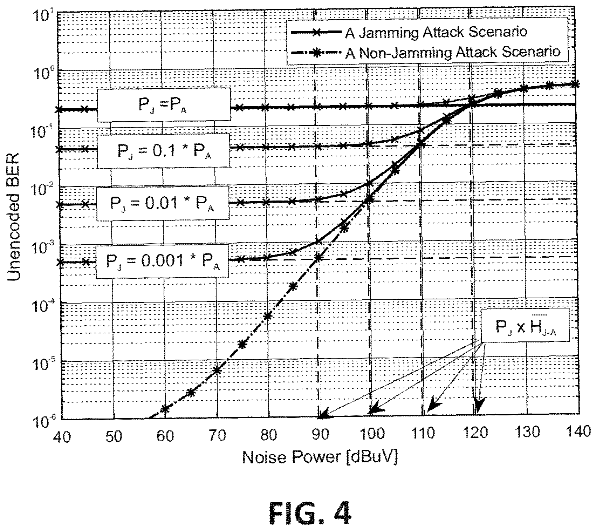

The same is applicable to the jamming power. As shown in Figure 4, the curves can be also used to obtain additional information from the jamming power, since the stable BER value of the jamming scenario decreases when the power of the jamming signal decreases.

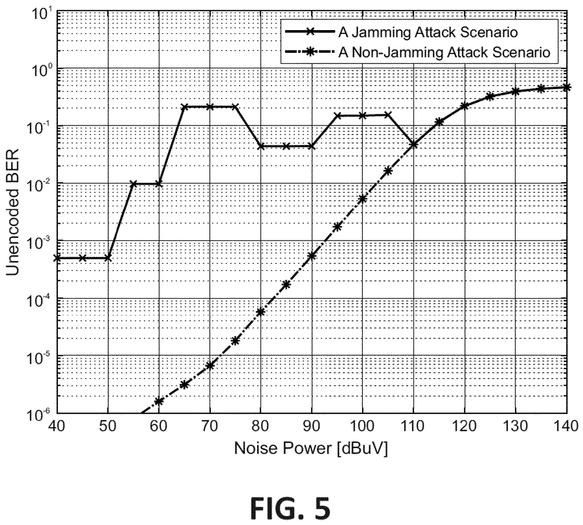

Finally, and additional embodiment is proposed in which the jammer uses variable jamming signal power, and the proposed jamming detection technique can be used to identify the corresponding jamming attack characteristics, such as the value of the signal power, as shown in Figure 5.

## Claims

1.    A communication method for jamming detection which comprises the steps of:

- establishing a communication between a transmitter (*A*) and a receiver (*B*);
- estimating, in a first transmitted symbol (*n* = 0), a complex channel gain

( $\hat{h}_{k,0}^{A-B}$ ) between A and B, defined by:

$$\hat{h}_{k,0}^{A-B} = h_{k,0}^{A-B} + e_{k,0}^{A-B}$$

wherein $e_{k,0}^{A-B}$ is defined as:

$$e_{k,0}^{A-B} = \frac{n_{k,0}^{B}}{x_{k,0}^{A-B}}$$

being $n_{k,0}^{B}$ the complex noise sample;

- sending a transmitted sample ( $x_{k,n}^{A-B}$ ) adding an added noise signal ( $W_l^B$ ), comprising a set of values of amplitude represented by I;

- obtaining a received sample (( $y_{k,n}^{A-B}$ );

- determining a detected sample ( $\hat{x}_{k,n}^{A-B}$ ) from the received sample ( $y_{k,n}^{A-B}$ ) and the estimated complex channel gain ( $\hat{h}_{k,0}^{A-B}$ ) using channel equalization;

- determine a reference BER curve without jamming between the transmitted sample ( $x_{k,n}^{A-B}$ ) and the detected sample ( $\hat{x}_{k,n}^{A-B}$ ) for multiple values of amplitude of the added noise signal;
- testing a transmitted signal for jamming detection by:

  • sending a testing transmitted sample ( $x_{k,n}^{A-B}$ ) adding the added noise signal ($W_l^B$);

  • obtaining a testing detected sample ( $\hat{x}_{k,n}^{A-B}$ )

  • determine a testing BER curve between the transmitted sample and the testing detected sample for each value of amplitude of the added noise signal;

  • compare the reference BER curve with the testing BER curve:

    ◦ if both match, there is no jamming; and
    ◦ if both are different, there is jamming.

2. The method according to claim 1, wherein the communication established is a power line communication.

3. The method according to claim 1, wherein the symbols are transmitted using an OFDM scheme.

4. The method according to claim 1, wherein 4-QAM Modulation is used.

5. The method according to claim 1, further comprising a step of calculating a signal-to-jamming-plus-noise ratio (SJNR) by:

$$\gamma_{k,n} = \frac{P_A H_{k,n}^{A-B}}{P_J H_{k,n}^{J-B} z_{k,n}^{J-B} + N_{k,n}^B}$$

wherein, with a null added noise signal ( $W_l^B$ ):

$$y_{k,n}^{A-B} = P_A h_{k,n}^{A-B} x_{k,n}^{A-B} + P_J h_{k,n}^{J-B} z_{k,n}^{J-B} + N_{k,n}^B$$

and $N_{sc}$ is a number of subcarriers with index $k$, $N_{symb}$ is a number of symbols transmitted with index n, $P_A$ is a transmit signal power of A; $P_J$ is a jamming signal power, $h_{k,n}^{X-B}$ is a channel gain of the link, $X$ -B, $X \in \{A,J\}$, $H_{k,n}^{X-B}$ is a squared magnitude value of the channel gain $h_{k,n}^{x-B}$, $X \in \{A,J\}$, $N_{k,n}^B$, is the environment additive noise received at B, and $z_{k,n}^{J-B}$ is the jamming signal.

6. The method according to claim 1, wherein the PLC channels are assumed to be Rayleigh fade channels and $\overline{H}_{k,n}^{X-B}$ defined by:

$$\overline{H}_{k,n}^{X-B}(f_k, d_{X-S}) = \exp\left(-2\left[a_0 + a_1 f_k^{a_2}\right] d_{X-B}\right)$$

wherein, $f_k$ is the frequency of the subcarrier k, $d_{X-B}$ is the distance between X, $X \in \{A, J\}$ and B, $a_0$, $a_1$ and $a_2$ are attenuation parameters of the PLC signal related to the PLC environment under consideration.

7. The method according to claim 1, wherein the reference BER curve is linear when the added noise signal ($W_l^B$) is between 40 dBμV and 120 dBμV.

8. The method according to claim 7, wherein the testing BER curve, wherein there is jamming, is constant when the

added noise signal ($W_l^B$) is less than an attenuated jamming signal power $P_J \overline{H}_{k,n}^{J-A}$.

9. The method according to claim 8, wherein the attenuated jamming signal power $P_J \overline{H}_{k,n}^{J-A}$ is obtained as the intersection between an asymptotic line coincident with the constant value of the testing BER curve and the reference BER curve.

10. The method according to claim 7, wherein the constant value of the testing BER curve decreases when the distance between the jamming attack and the receiver (B) increases.

11. The method according to claim 7, wherein the testing BER curve, wherein there is a variable jamming, is variable and no linear when the added noise signal ($W_l^B$) is between 40 dBμV and 120 dBμV.

12. A communication system for detecting jamming comprising:

- a transmitter (A);
- a receiver (B);
- a communication network between the transmitter (A) and the receiver (B); and
- a processing unit configured to carry out the steps of the method according to claims 1 to 11 to detect a jamming device (J) connected to the same communication network and configured to produce DoS attacks by the injection of an artificial signal or noise in the communication network.

**FIG. 1**

**FIG. 2**

**FIG. 3**

**FIG. 4**

**FIG. 5**

# EUROPEAN SEARCH REPORT

Europäisches
Patentamt
European
Patent Office
Office européen
des brevets

**Application Number**

EP 24 38 3197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/041158 A1 (SAKAI TAKAE [JP] ET AL) 12 February 2009 (2009-02-12) * abstract * * paragraph [0002] - paragraph [0029] * * paragraph [0039] - paragraph [0106] * * figures 1-7 * ----- | 1-12 | INV. H04K3/00 |
| A | KR 102 253 029 B1 (AGENCY DEFENSE DEV [KR]) 17 May 2021 (2021-05-17) * the whole document * ----- | 1-12 | |

**TECHNICAL FIELDS SEARCHED (IPC)**

H04K
H04B

The present search report has been drawn up for all claims

| Place of search | Date of completion of the search | Examiner |
|---|---|---|
| The Hague | 21 March 2025 | Dujardin, Corinne |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
..............................................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 24 38 3197

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2025

| Patent document cited in search report | | Publication date | Patent family member(s) | | Publication date |
|---|---|---|---|---|---|
| US 2009041158 | A1 | 12-02-2009 | CN | 101414840 A | 22-04-2009 |
| | | | JP | 4452731 B2 | 21-04-2010 |
| | | | JP | 2009044406 A | 26-02-2009 |
| | | | US | 2009041158 A1 | 12-02-2009 |
| KR 102253029 | B1 | 17-05-2021 | NONE | | |

EPO FORM P0459

For more details about this annex : see Official Journal of the European Patent Office, No. 12/82

**EP 4 738 734 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2605105 T3